# EUROPEAN PATENT SPECIFICATION

(11) **EP 1 332 932 B1**
(45) Date of publication and mention of the grant of the patent: **14.11.2012**
(21) Application number: 03001956.6
(22) Date of filing: 30.01.2003
(51) Int. Cl.: B60R 13/02, B60R 21/20

(54) **Vehicle occupants protection system**
Kraftfahrzeug- Insassenschutzsystem
Système de protection pour les occupants d'un véhicule

(30) Priority: 04.02.2002 JP 2002027462
(43) Date of publication of application: 06.08.2003
(73) Proprietor: HONDA GIKEN KOGYO KABUSHIKI KAISHA, Minato-ku Tokyo (JP)
(72) Inventor: Hanjono, Hiroshi, Wako-shi, Saitama (JP)
(74) Representative: Prechtel, Jörg

(56) References cited:
- EP-A- 0 841 221
- DE-A- 19 812 737
- US-A- 5 163 730
- US-A- 6 142 506

## Description

### BACKGROUND OF THE INVENTION

### 1. Field of the Invention

The present invention relates to a technique for improving a vehicle occupants protection system in which the protection of occupants is enhanced at a pillar and a roof side portion of a vehicle when an impact is applied to a side of the vehicle.

### 2. Description of the Related Art

In recent years, developments have been taking place in order to increase the performance of protecting, in particular, the heads of occupants of a vehicle when an impact is applied to a side of the vehicle.

EP 0 841 221 A1, on which the preamble part of claim 1 is based, shows an impact absorbing member (84) which is attached to the pillar inner panel (34) by at least one bolt 96. The pillar garnish is attached to the pillar inner panel by clip (58). The attaching of this vehicle occupant protection system is time consuming, as the impact absorbing member has to be fastened to the pillar inner panel separately from the pillar garnish. Furthermore, the pillar garnish comprises multiple layers, namely layers of soft material and a layer of hard material, in order to provide an impact absorbing function in an area in front of the airbag when viewed in deploying direction. This stabilization of the garnish is necessary, as the impact absorbing member does not extend in this curved portion of the pillar garnish.

US 6,142,506 shows vehicle occupants protection systems with features according to the preamble of claim 1,wherein impact absorbing members are separately attached to the pillar inner panel.

A technique has been developed for this type of vehicle occupants protection system in which technique a roof side airbag is installed, for example, from a pillar to a side edge of a roof of the vehicle, whereby the roof side airbag is caused to inflate along the door glasses in such a way as a curtain falls when an impact of a predetermined magnitude or more is applied to a side of the vehicle.

In addition, another technique has been developed for another type of vehicle occupants protection system in which a pillar garnish is mounted on a passenger compartment side of a pillar with a predetermined amount of space being provided therebetween for accommodating therein a small impact absorbing member, so that when an impact of a small magnitude is applied to a side of the vehicle, the impact so applied can be absorbed by the small impact absorbing member.

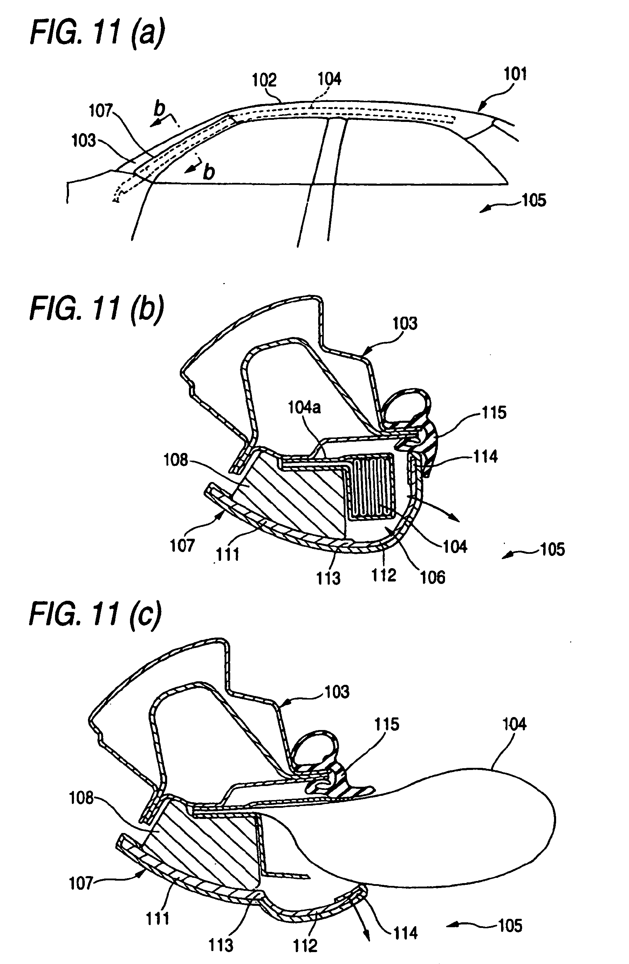

Furthermore, a technique has been developed in which both the roof side airbag and the small impact absorbing member are provided at the pillar portion. Known as this type of vehicle occupants protection system is, for example, an "automotive occupants protection system layout construction" disclosed in Japanese Examined Patent Publication No. 3147172 (hereinafter, referred to as the "related art") . The summary of the related art will be described below with reference to Figs. 11A to 11C as an example of the vehicle occupants protection system.

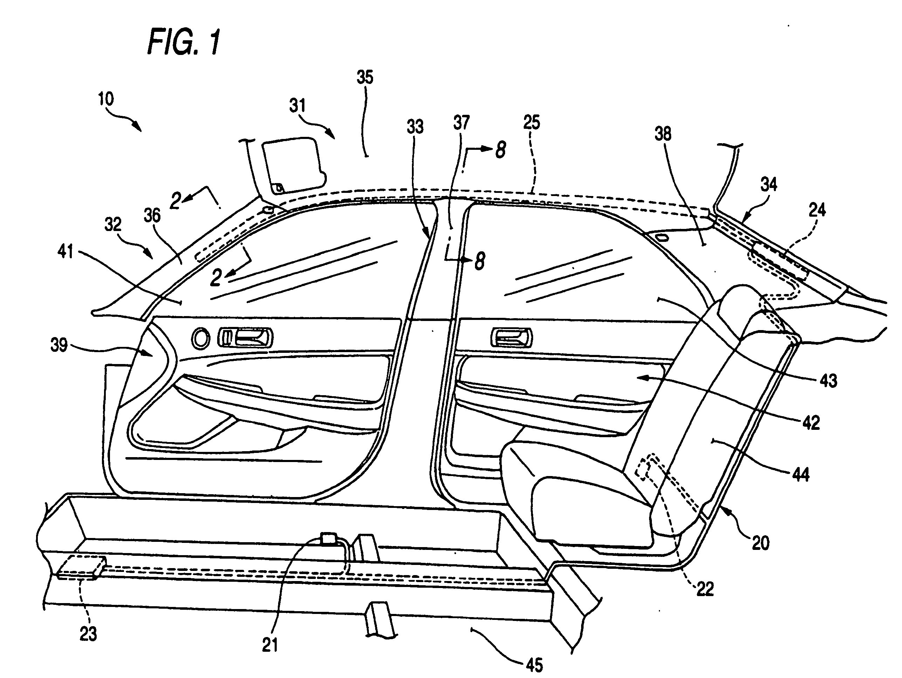

Figs. 11A to 11C are schematic views of the related art vehicle occupants protection system, and the figures so used here are Figs. 1, 2 and 4 of Japanese Examined Patent Publication No. 3147172. However, note that new reference numerals are given. Fig. 11A shows a side construction of the system as viewed from a passenger compartment side of the vehicle, Fig. 11B shows a cross-sectional construction of the system taken along the line b-b of Fig. 11A, and Fig. 11C shows the function of the system as viewed correspondingly to Fig. 11B.

Fig. 11A shows that a bag 104 is installed in a side edge of a roof 102 and part of a front pillar portion 103 of a vehicle 101. The bag 104 is a roof side airbag for protecting the upper half bodies of occupants when an impart of a predetermined magnitude or more is applied to a side of the vehicle.

Fig. 11B shows that a pillar garnish 107 is mounted on a passenger compartment 105 side of the front pillar portion 103 with a space 106 being maintained therebetween for accommodating therein the bag 104, as well as a rib 108 (corresponding to a small impact absorbing member of the invention) for absorbing an impact of such a small magnitude that the bag 104 remains unopened.

The pillar garnish 107 is a member which is constituted integrally by a thick base portion 111 which surrounds the rib 108 and a thin bag accommodating portion 112 which surrounds the bag 104. The base portion 111 is attached to the front pillar portion 103, whereas the bag accommodating portion 112 can be deformed from a proximal end portion 113 of the bag accommodating portion 112 in a thickness direction of the pillar garnish 107.

A fixing portion 104a of the bag 104, the rib 108 and the base portion 111 of the pillar garnish 107 are bolted together to the front pillar portion 103. A distal end 114 of the bag accommodating portion 112 is elastically supported by an opening weatherstrip 115 disposed at a rear portion of the front pillar portion 103.

As shown in Fig. 11C, the bag 104 can expand into the passenger compartment 105 while forcibly opening the bag accommodating portion 112 due to gas generated when an impact of a predetermined magnitude or more is applied to a side of the vehicle. As this occurs, the bag accommodating portion 112 deforms from the proximal end portion 113 of the bag accommodating portion 112 to the passenger compartment 105 side.

The pillar garnish 107 used in the related art is required to (1) function as an interior material having an impact absorbing construction in an ordinary condition where no impact is applied, (2) when an impact of such a small magnitude that the bag 104 remains unopened is applied, ensure the quick transmission of the impact to the rib 108, and (3) when the bag 104 opens, deform so sufficiently that the bag 104 is allowed to inflate quickly and smoothly.

In general, the integration of the rib 108 to the pillar garnish 107 is implemented by fixing the rib 108 to the pillar garnish 107 over the entirety of a bottom surface thereof. This procedure allows the pillar garnish 107 and the rib 108 to be attached to the front pillar portion 103 at one time.

Of positions of the pillar garnish 107, a position that is forcibly deformed by the force of the expanding bag 104 is only a position thereof which extends from the proximal end portion 113 to the bag accommodating portion 112 which is located distally of the proximal end portion 113. Since the bag accommodating portion 112 is intended only to surround the bag 104, the length from the proximal end portion 113 to the distal end 114 is short. When the bag 104 inflates largely the bag accommodating portion 112 also deforms largely in accordance with the amount in which the bag 104 so inflates. Since the short bag accommodating portion 112 is deformed largely, a large magnitude of force is applied to the bag accommodating portion 112, in particular, to the proximal end portion 113.

Since in case it is made too thin, the bag accommodating portion 112 becomes too soft, the bag accommodating portion 112 cannot function as the interior material sufficiently. In contrast, since in case it is made too thick, the bag accommodating portion 112 becomes too hard, an excessively large magnitude of force is applied, in particular, to the proximal end portion 113. It is not easy to secure the durability of the proximal end portion 113 against such an excessively large magnitude of force.

### SUMMARY OF THE INVENTION

To cope with this, an object of the invention is to provide a technique for a vehicle occupants protection system which allows the pillar garnish to (1) function as the interior material having an impact absorbing construction in an ordinary condition, (2) when an impact of such a small magnitude that a roof side airbag remains unopened is applied, ensure the quick transmission of the impact to a small impact absorbing member, and (3) when the roof side airbag opens, deform so sufficiently that the roof side airbag is allowed to inflate quickly and smoothly.

With a view to attaining the object, according to a first aspect of the invention, there is provided a vehicle occupants protection system in accordance with claim 1. A pillar garnish is mounted on a passenger compartment side of a pillar which supports a roof with a predetermined amount of space being maintained therebetween for accommodating a roof side airbag, as well as a small impact absorbing member for absorbing an impact of such a small magnitude that the roof side airbag remains unopened, whereby the roof side airbag is inflated by gas generated when an impact of a predetermined magnitude or more is applied to a side of a vehicle so as to expand into a passenger compartment of the vehicle while forcibly opening one end portion of the pillar garnish, the vehicle occupants protection system being characterized in that of positions of a bottom surface of the small impact absorbing member, not a position closer to the roof side airbag but a position farther away from the roofs side airbag is attached to the pillar garnish.

The deformation proximal end at one of the end portions of the front pillar garnish can be set at a boundary point between the position of the bottom surface of the small impact absorbing portion which is located closer to the roof side airbag and the position thereof which is located farther away from the roof side airbag by attaching not the closer position but the farther position to the pillar garnish. The length from the deformation proximal end to the deformation distal end becomes long. This can facilitate the deformation of the one end portion of the front pillar garnish to the thickness direction thereof by such an extent that the length is enlarged. Due to this, the one end portion of the front pillar garnish is allowed to deform largely with less force without being restricted by the small impact absorbing member. The one end portion of the front pillar garnish is allowed to easily deform by such a sufficient amount that the roof side airbag is allowed to inflate quickly and smoothly when the roof side airbag is deployed.

Moreover, of the positions of the bottom surface of the small impact absorbing member, the position which is located farther away from the roof side airbag is maintained in the attached condition. Due to this, even after the roof side airbag has been inflated outwardly to be deployed, the small impact absorbing member remains attached to the pillar together with the pillar garnish. Consequently, the small impact absorbing member can perform its impact absorbing function even after the roof side airbag has been deployed.

In addition, the length can be enlarged extremely easily without altering the layout relationship between the roof side airbag and the small impact absorbing member and/or enlarging the space provided between the front pillar and the front pillar garnish.

Furthermore, in the ordinary condition where no impact is applied, the front pillar garnish can sufficiently perform its function as the interior material.

Moreover, when the vehicle receives at a side thereof an impact of such a small magnitude that the roof side airbag remains unopened, the impact can be transmitted from the front pillar garnish to the small impact absorbing member in quick and ensured fashions.

The pillar garnish is mounted on a passenger compartment side of a pillar which supports a roof with a predetermined amount of space being maintained therebetween for accommodating a roof side airbag, as well as a small impact absorbing member for absorbing an impact of such a small magnitude that the roof side airbag remains unopened with a bottom surface of the small impact absorbing member being attached to the pillar garnish, whereby the roof side airbag is inflated by gas generated when an impact of a predetermined magnitude or more is applied to a side of a vehicle so as to expand into a passenger compartment of the vehicle while forcibly opening one end portion of the pillar garnish, the vehicle occupants protection system being characterized in that the bottom surface of the small impact absorbing member is constructed to be attached to the pillar garnish through joining such as bonding, heat crimping, welding, ultrasonic welding, machine screwing.and clipping, and in that a joining force at a position of the bottom surface of the small impact absorbing member which is closer to the roof side airbag is set smaller than a joining force at a position of the bottom surface of the small impact absorbing member which is farther away from the roof side airbag, the force so set smaller being a force which is weak enough to allow the pillar garnish to separate from the bottom surface of the small impact absorbing member when the pillar garnish is deformed.

A large magnitude of separation force is applied to the portion where the front pillar garnish and the bottom surface of the small impact absorbing member are joined together when the pillar garnish is deformed by the force with which the roof side airbag is opened.

To deal with this, since the joining force at the position of the bottom surface of the small impact absorbing member which is located closer to the roof side airbag is set smaller than the joining force at the position of the bottom surface of the small impact absorbing member which is located farther away from the roof side airbag, the joining force so set smaller being a force which is so weak that the pillar garnish is allowed to separate from the bottom surface of the small impact absorbing member when the pillar garnish is deformed, of the joined positions of the bottom surface of the small impact absorbing member, the position located closer to the roof side airbag is allowed to separate from the front pillar garnish when the large magnitude of separation force is applied. Consequently, the deformation proximal end at the one end portion of the front pillar garnish can be set at the boundary point between the closer position and the father position. The length from the deformation proximal end to the deformation distal end becomes large. This can facilitate the deformation of the one end portion of the front pillar garnish in the thickness direction thereof by such an extent that the length is increased. This allows in turn the one end portion of the front pillar garnish to deform largely with less force without being restricted by the small impact absorbing member . The one end portion of the front pillar garnish is thus allowed to deform easily by such a sufficient amount that the roof side airbag can inflate outwardly quickly and smoothly.

Moreover, of the positions of the bottom surface of the small impact absorbing member, what is caused to separate from the pillar garnish is only the position which is located closer to the roof side airbag, and the position which is located father away from the roof side airbag is maintained in the joined condition. Due to this, even after the roof side airbag has been inflated to be deployed, the small impact absorbing member remains attached to the pillar together with the pillar garnish. Consequently, the small impact absorbing member can attain the function to absorb impact even after the roof side airbag has been deployed.

In addition, the length can be enlarged extremely easily without altering the layout relationship between the roof side airbag and the small impact absorbing member and/or enlarging the space provided between the pillar and the front pillar garnish.

Furthermore, in the ordinary condition where no impact is applied, the front pillar garnish can perform its function to play a role of the interior material sufficiently.

In addition, when the vehicle receives at a side thereof an impact of such a small magnitude that the roof side airbag remains unopened, the impact so received can be transmitted from the front pillar garnish to the small impact absorbing member in quick and ensured fashions.

### BRIEF DESCRIPTION OF THE DRAWINGS

Fig. 1 is a side view of a vehicle according to the invention as viewed from a passenger compartment side thereof;
Fig. 2 is a sectional view taken along the line 2-2 in Fig. 1;
Fig. 3A is a diagram showing the constructions on the periphery of a front pillar garnish and a small impact absorbing member;
Fig. 3B is a comparative diagram of Fig. 3B;
Fig. 4 is a diagram (Part 1) showing the function of a vehicle occupants protection system according to the invention;
Fig. 5 is a diagram (Part 2) showing the function of the vehicle occupants protection system according to the invention;
Fig. 6 is a diagram showing a modified example according to the invention made to the periphery of the front pillar garnish and the small impact absorbing member;
Fig. 7 is a diagram showing the function of the vehicle occupants protection system (the modified example) according to the invention;
Fig. 8 is a sectional view taken along the line 8-8 in Fig. 1;
Fig. 9 is a diagram showing the function of a roof side airbag according to the invention at a portion where a center pillar garnish is located;
Fig. 10 is a diagram showing the function of the roof side airbag according to the invention; and
Fig. 11 is a schematic diagram showing a related art vehicle occupants protection system.

### DETAILED DESCRIPTION OF THE PREFERRED EMBODIMENTS

An embodiment of the invention will be described below based upon the accompanying drawings. Note that when used herein, terms such as "front", "rear", "left", "right", "upper" and "lower" denote respective directions as viewed from the driver. In addition, the drawings are to be viewed in a direction in which reference numerals are oriented.

Fig. 1 is a side view of a vehicle according to the invention as viewed from a passenger compartment side of the vehicle and shows that a roof side airbag system 20 is installed in the vehicle 10. The roof side airbag system 20 is designed so as to protect.the upper bodies of occupants when an impact of a predetermined magnitude or more is applied to a side of the vehicle 10. The roof side airbag system 20 so designed includes impact detecting sensors 21, 22 for detecting that an impact of a predetermined magnitude or more is applied to a side of the vehicle 10, a control unit 23 for processing sensor signals from the impact detecting sensors 21, 22, an inflator 24 designed to inject gas according to a control signal from the control unit 23 and a roof side airbag 25 designed to be inflated by the gas from the inflator 24. The roof side airbag 25 is such as to be installed in a side edge of a roof 31 and part of a front pillar 32 of pillars which support the roof 31.

In the figure, reference numeral 33 denotes: a center pillar; 34: a rear pillar; 35: a roof lining constituting a lining for the roof 31; 36: a front pillar garnish constituting a lining for the front pillar 32; 37: a center pillar garnish constituting a lining for the center pillar 33; 38: a rear pillar garnish constituting a lining for the rear pillar 34; 39: a front door, 41: a window glass in the front door 39; 42: a rear door; 43: a window glass in the rear door 42; 44: a rear seat; and 45: a floor.

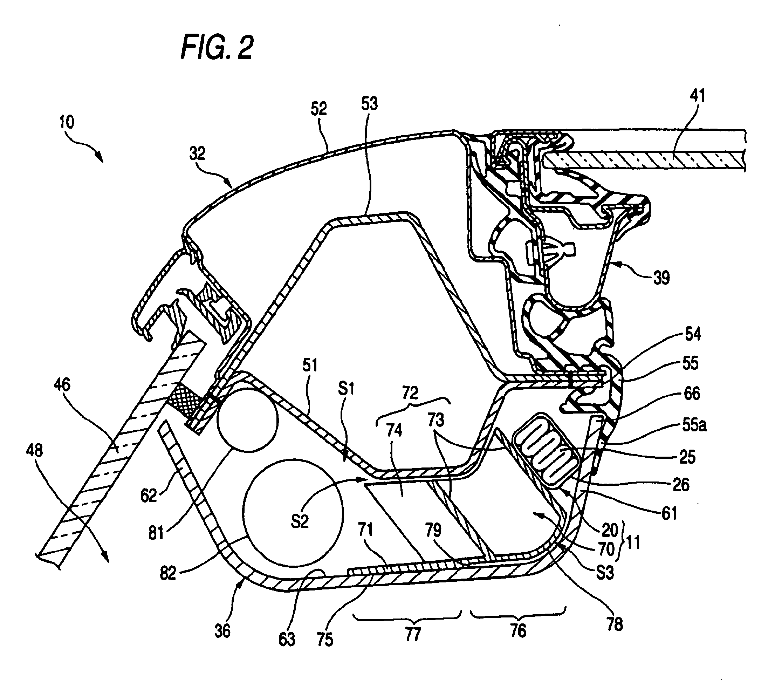

Fig. 2 is a sectional view taken along the line 2-2 in Fig. 1 and shows that a windscreen 46 is mounted to a front end portion of the right-hand side front pillar 32 and that the front door 39 is mounted to a rear end portion thereof in such a manner as to opened and closed.

The front pillar 32 is a structure having a closed cross section which is constituted in combination by a pillar inner panel 51 disposed on a passenger compartment 48 side and a pillar outer panel 52 disposed on an external side of the vehicle and is a member reinforced by partitioning an interior space of the closed cross section with a reinforcing material 53. The front pillar 32 has a rear flange portion 54 in which a flange portion at a rear end of the pillar inner panel 51 and a flange portion at a rear end of the pillar outer panel 52 overlap each other to be joined together.

The rear flange portion 54 extends to the rear and a rear end thereof terminates as an edge of a front door opening. A body-side weatherstrip 55 is mounted on the rear flange portion 54 for sealing by being brought into contact with an inner surface of an edge of the front door 39 when the front door 39 is closed.

The invention is characterized in that the front pillar garnish 36 is disposed on the passenger compartment 48 side of the front pillar 32 with a predetermined amount of space S1 being provided therebetween , and the space S1 accommodates the roof side airbag 25 and a small impact absorbing member 70. The roof side airbag system 20 and the small impact absorbing member 70 constitutes a vehicle occupants protection system 11.

To be specific, the front pillar garnish 36 is a structure having a substantially U-shaped cross section which surrounds the entirety of the passenger compartment 48 side of the front pillar 32. This structure having the substantially U-shaped cross section is an elongated interior material which extends vertically along the front pillar 32 (that is, in perpendicular directions to the surface of the figure).

As viewed from the top like this, one end portion 61 of the front pillar garnish 36 extends as far as a rear end of the front pillar 32 or the vicinity of the rear flange portion 54. By allowing an elastic lip 55a to extend from the body-side weatherstrip 55 to the one end portion 61 side, the elastic lip 55a can be brought into an elastic contact with an external surface of the one end portion 61. Consequently, the opening of the one end portion 61 to the passenger compartment 48 side can be restricted by the elastic lip 55a.

In addition, the other end portion 62 of the front pillar garnish 36 extends as far as the vicinity of a front end of the front pillar 32.

The figure shows that the roof side airbag 25 is disposed in the space S1 at the one end portion 61 of the front pillar garnish 36 (on the right-hand side of the figure), that the small impact absorbing member 70 is disposed adjacent to and forward of the roof side airbag 25 (on the left-hand side of the figure) , and that wiring harnesses 81, 82 are disposed forward of the small impact absorbing member 70.

The side airbag 25 is such as to be accommodated in a bag accommodation case 26 in a folded condition. The bag accommodation case 26 is an accommodation member adapted to be broken to be deployed when the side airbag 25 inflates and is attached to the front pillar 32. Thus, the side airbag 25 can be attached to the front pillar 32.

In addition, the side airbag 25 includes a supplemental deployment member such as a string which is adapted to be deployed together with the side airbag 25 to perform a supplemental action to the bag. Hereinafter, whenever referring to the side airbag 25, the supplemental deployment member is understood to be included therein.

The small impact absorbing member 70 is an elongate member extending vertically along the front pillar garnish 36 and is also an impact absorbing member for absorbing an impact of such a small magnitude that the roof side airbag 25 remains unopened. The small impact absorbing member 70 is an integrally molded article including a bottom plate 71 which extends vertically along an inner surface 63 of the front pillar garnish 36 and a rib portion 72 extending from the bottom plate 71 toward the front pillar 32.

A slight space S2 is provided between the front pillar 32 and the front portion of the rib portion 72. The rib portion 72 is a member constructed by arranging in parallel crosses a plurality of vertical ribs 73 ... (... notes a plural member, and this will be true hereinafter) which extend vertically along the front pillar garnish 36 and a plurality of horizontal ribs 74 ... which extend longitudinally in such a manner as to cross the plurality of vertical ribs 73 ...

The front pillar garnish 36 and the small impact absorbing member 70 are products each formed of non-metallicmaterial (for example, a thermoplastic resin such as polypropylene) or a metallic material.

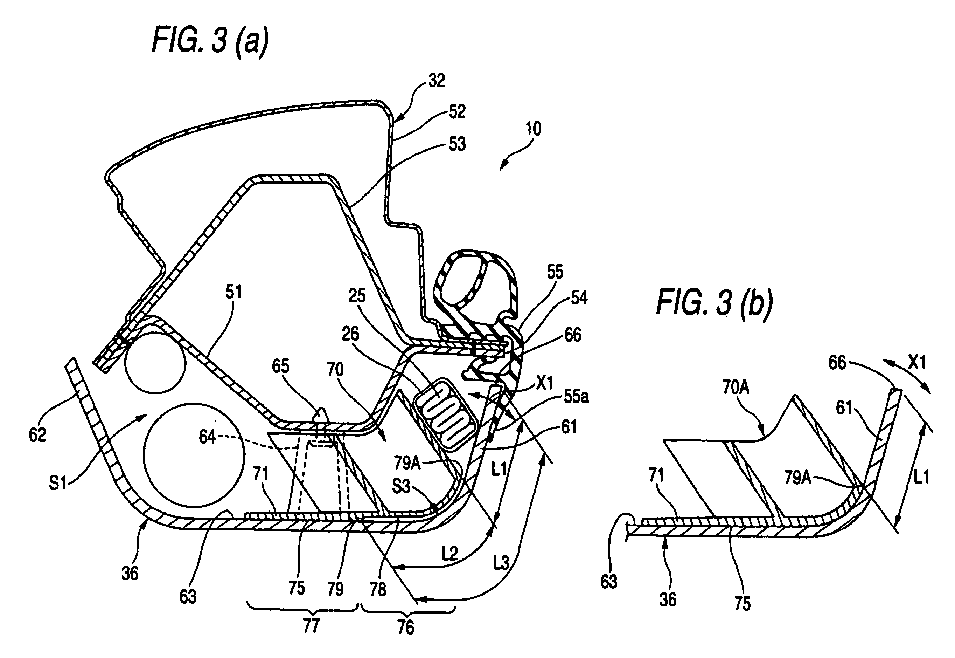

Figs. 3A, 3B are diagrams showing the constructions on the periphery of the front pillar garnish and the small impact absorbing member, in which Fig. 3A corresponds to Fig. 2 and shows the embodiment of the invention, and Fig. 3B shows a small impact absorbing member as a comparison example.

Fig. 3A shows that a mounting seat 64 is made to extend from the front pillar garnish 36 toward the pillar inner panel 51 and that the front pillar garnish 36 is attached to the front pillar 32 by attaching the mounting seat 64 to the pillar inner panel 51 with a clip 65.

As shown in Fig. 3A, the invention is characterized in that of positions of a bottom surface of the small impact absorbing member 70 or a bottom surface 75 of the bottom plate 71, not a position 76 (a rear half portion 76) which is located closer to the roof side airbag 25 but a position 77 (a front half portion 77) which is located farther away from the roof side airbag 25 is attached to the front pillar garnish 36. Thus, the small impact absorbing member 70 is only attached to the front pillar garnish 36.

To be more specific, of the positions of the bottom plate 71, the rear half portion 76 (the right-hand side half portion in the figure) which is located closer to the roof side airbag 25 is made thinner than the front half portion 77. As a result, a surface 78 which is spaced away from the inner surface 63 of the front pillar garnish 36 or a separate open surface 78 can be provided along the rear half portion 76 of the bottom plate 71. A gap S3 of a predetermined interval can be secured between the separate open surface 78 and the inner surface 63 of the front pillar garnish 36. Thus, the gap S3 of a predetermined interval can be provided between the rear half portion 76 of the bottom plate 71 and the inner surface 63 of the front pillar garnish 36. The length of the rear half portion 76 along which the gap S3 is provided is denoted by L2.

Of the positions of the bottom surface 75 of the bottom plate 71, the position 77 (the front half portion 77) which is located farther away from the roof side airbag 25 is constructed to be attached to the front pillar garnish 36 through joining such as bonding, heat crimping, welding, ultrasonic welding, machine screwing and clipping. A joining force resulting from the joining is of such a large magnitude that the small impact absorbing member 70 and the front pillar garnish 36 which are so joined together are not allowed to separate from each other even when the front pillar garnish 36 is bent (or deformed).

In contrast, with the small impact absorbing member 70A of the comparison example shown in Fig. 3B, the entirety of a bottom surface 75 is attached to an inner surface 63 of a front pillar garnish 36 through joining. In this comparison example, one end portion 61 of the front pillar garnish 36 can be referred to as a cantilever which can deform in a thickness direction of the front pillar garnish 36 (in a direction indicated by an arrow X1) from a rear end portion 79A of the small impact absorbing member 70A which functions as a proximal end for swing. The distance from one end 66 of the front pillar garnish 36 to the rear end portion 79A (the proximal end 79A for swing or a hinge) is L1.

In contrast to this, with the small impact absorbing member 70 according to the invention shown in Fig. 3A, the position which is located closer to the roof side airbag 25 is not attached to the front pillar garnish 36. Consequently, the swing proximal end of the one end portion 61 of the front pillar garnish 36 becomes a boundary point 79 between the front half portion 77 and the rear half portion 76. The length from one end 66 of the front pillar garnish 36 to the boundary point 79 (the proximal end 79 for swing or a hinge) is L3, which is longer by the length L2 of the rear half portion 76 along which the gap S3 is provided than the comparison example shown in Fig. 3B. Namely, "L3=L1+L2." Thus, according to the invention, the deformation of the one end portion 61 of the front pillar garnish 36 toward the thickness direction (a direction indicated by an arrow X) can be facilitated by an extent that the deformable length is increased.

Next, the functions of the roof side airbag 25, the front pillar garnish 36 and the small impact absorbing member 70 which are constructed as has been described heretofore will be described with reference to Figs. 3A to 5.

With the front pillar garnish 36 shown in Fig. 3A, the thickness is set such that front pillar garnish 36 can perform its function as an interior material having an impact absorbing construction in the ordinary condition where no impact is applied.

When the vehicle 10 receives at a side thereof an impact of such a small magnitude that the roof side airbag 25 remains unopened or a light impact, there may occur a case where the upper half body (for example, the head or shoulder) of an occupant hits against the front pillar garnish 36. As this occurs, the light impact can be transmitted from the front pillar garnish 36 to the small impact absorbing member 70 in quick and ensured fashions. The small impact absorbing member 70 can absorb the impact energy through deformation. Namely, the small impact absorbing member 70 can absorb and carry impact energy by being deformed when receiving the impact of such a small magnitude that the roof side airbag 25 remains unopened.

On the other hand, when the impact detecting sensors 21, 22 (refer to Fig. 1) detect that an impact of a predetermined magnitude or more is applied to a side of the vehicle 10, the roof side airbag 25 starts to be inflated by gas generated then.

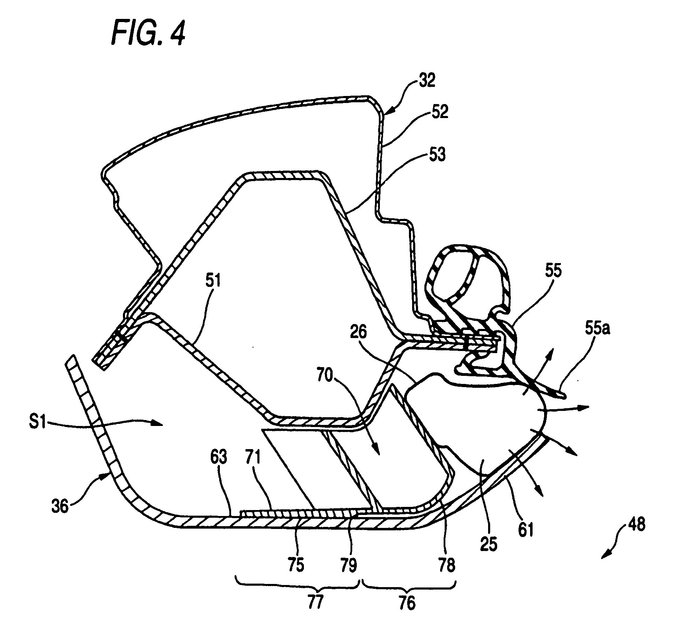

Fig. 4 is a diagram (Part 1) showing the function of the vehicle occupants protection system according to the invention and shows that the roof side airbag 25 expands into the passenger compartment 48 side while forcibly opening the one end portion 61 of the front pillar garnish 36. The one end portion 61 of the front pillar garnish 36 is pushed toward the passenger compartment 48 side on the boundary point 79 which functions as the proximal end for swing (the proximal end for deformation) to thereby deform elastically, the one end portion 61 being thus allowed to separate from the lip portion 55a.

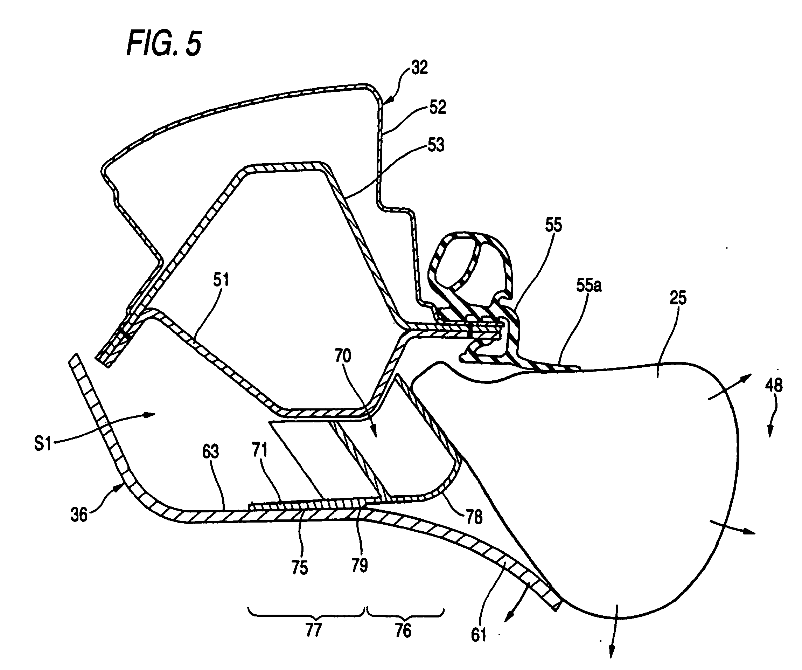

Fig. 5 is a diagram (Part 2) showing the function of the vehicle occupants protection system according to the invention and shows that the one end portion 61 of the front pillar garnish 36 is pushed further toward the passenger compartment 48 side on the boundary point 79 which functions as the proximal end for swing to thereby deform elastically further when the roof side airbag 25 further expands.

As shown in Fig. 3A, the swing proximal end of the one end portion 61 of the front pillar garnish 36 is located at the boundary point 79. The length L3 from the one end 66 to the boundary point 79 is longer by the length L2 of the rear half portion 76 along which the gap S3 is provided than the comparison example shown in Fig. 3B. Thus, the one end portion 61 of the front pillar garnish 36 can deform easily toward the thickness direction thereof by the extent that the length of the deformable portion is so increased. Due to this, the one end portion 61 of the front pillar garnish 36 is allowed to deform largely with less force without being restricted by the small impact absorbing member 70.

Consequently, when the roof side airbag 25 is inflated, the one end portion 61 of the front pillar garnish 36 can easily deform by such a sufficient amount that the roof side airbag 25 can expand quickly and smoothly. Thus, since the one end portion 61 of the front pillar garnish 36 is allowed to deform largely with less force, there is caused no concern that the roof side airbag 25 and/or the small impact absorbing member 70 may be damaged.

Moreover, the joining force at the front half portion 77 is so strong that the front pillar garnish 36 does not separate from the front half portion 77 even when the front pillar garnish 36 is bent (or deformed). Of the portions of the bottom surface 75 of the small impact absorbing member 70, the front half portion is maintained in the attached condition. Due to this, even after the roof side airbag 25 has been inflated to be deployed, the small impact absorbing member 70 can be maintained in the attached condition to the front pillar 32 together with the front pillar garnish 36. Consequently, the small impact absorbing member 70 can perform its function to absorb impact even after the roof side airbag 25 has been deployed.

In addition, the length L3 can be increased extremely easily without altering the layout relationship between the roof side airbag 25 and the small impact absorbing member 70 and/or enlarging the space S1.

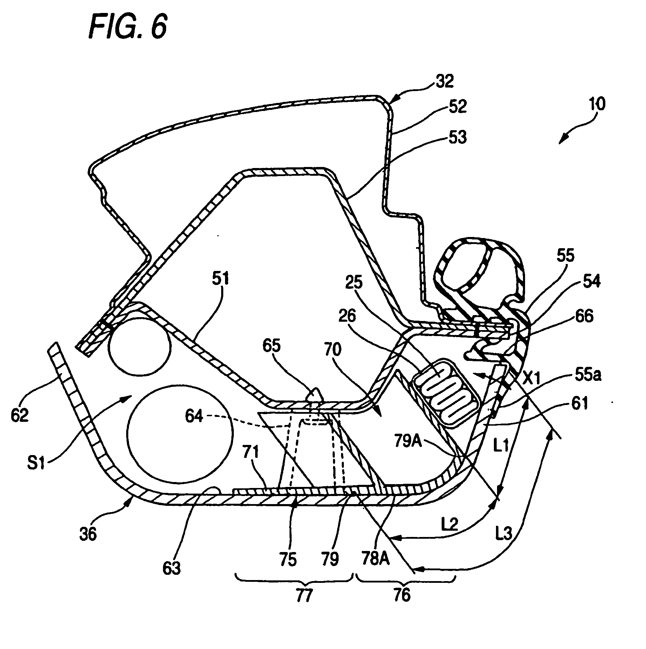

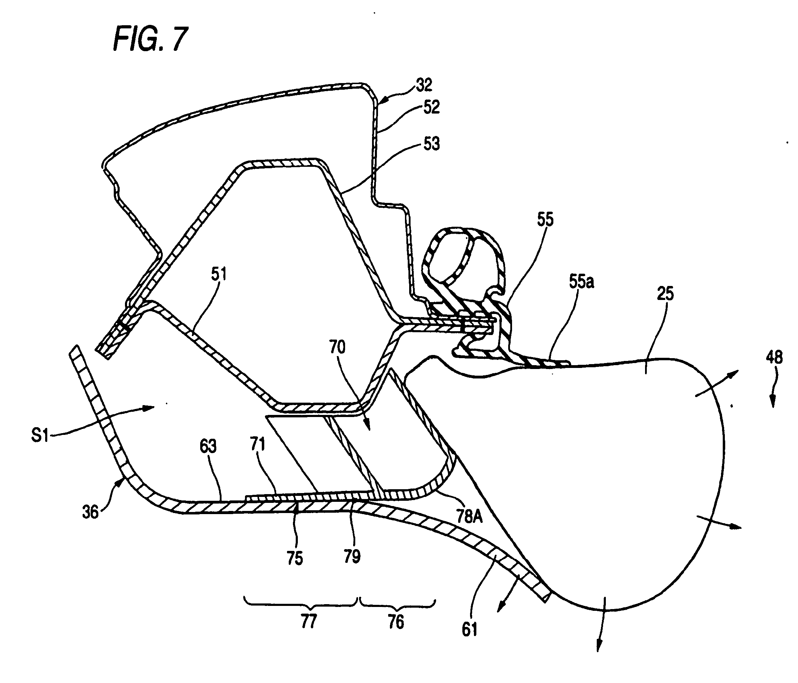

Next, a modified example of a vehicle occupants protection system will be described based upon Figs. 6 and 7.

Fig. 6 is a diagram showing the modified constructions on the periphery of the front pillar garnish and the small impact absorbing member and corresponds to Fig. 3A. Like reference numerals are imparted to constituent members like to those shown in Fig. 3A, and the description thereof will be omitted.

In the modified example, of positions of a bottom surface of a small impact absorbing member 70 or a bottom surface 75 of a bottom plate 71, both a position 76 (a rear half portion 76) which is located closer to a roof side airbag 25 and a position 77 (a front half portion 77) which is located farther away from the roof side airbag 25 are attached to a front pillar garnish 36.

The rear half portion 76 and front half portion 77 are constructed to be attached to the front pillar garnish 36 through joining such as bonding, heat crimping, welding, ultrasonic welding, machine screwing and clipping.

The modified example is characterized in that a joining force at the rear half portion 76 which is located closer to the roof side airbag 25 is set smaller than a joining force at the front half portion 77 which is located farther away from the roof side airbag 25. The joining force at the front half portion 77 is so strong that the front pillar garnish 36 does not separate from the front half portion 77 even when the front pillar garnish 36 is bent (or deformed). The joining force at the rear half portion 76 is so weak that the front pillar garnish 36 separates from the rear half portion 76 when the front pillar garnish 36 is bent.

Thus, a surface 78A adapted to easily separate from an inner surface 63 of the front pillar garnish 36 or a separate open surface 78A can be provided along the rear half portion 76 of the bottom plate 71. The length of the rear half portion 76 along which the separate open surface 78A is provided is L2.

Next, the functions of the roof side airbag 25, the front pillar garnish 36 and the small impact absorbing member 70 of the modified example will be described based upon Figs. 6 and 7.

In Fig. 6, the front pillar garnish 36 plays a role of an interior material having an impact absorbing construction in the ordinary condition where no impact is applied.

When an impact of such a small magnitude that the roof side airbag 25 remains unopened or a light impact is applied to a side of the vehicle 10, the light impact can be transmitted from the front pillar garnish 36 to the small impact absorbing member 70 in quick and ensured fashions. The small impact absorbing member 70 absorbs the impact energy by deforming.

In contrast, when an impact of a predetermined magnitude or more is applied to a side of the vehicle 10, the roof side airbag 25 starts to be inflated by gas generated then.

Fig. 7 is a diagram showing the function of the vehicle occupants protection system (the modified example) according to the invention and shows that the one end portion 61 of the front pillar garnish 36 is pushed toward the passenger compartment 48 side on the boundary point 79 which functions as the proximal end for swing to thereby be elastically deformed by virtue of the inflation of the roof side airbag 25.

When the front pillar garnish 36 is deformed by virtue of the force of the inflating roof side airbag 25, a large magnitude of separation force is applied to a portion where the front pillar garnish 36 and the bottom surface 75 of the small impact absorbing member 70 are joined together.

To cope with this, of the positions of the bottom surface 75 of the small impact absorbing member 70, since a joining force at the position 76 which is located closer to the roof side airbag 25 is set smaller than a joining force at the position 77 which is located farther away from the roof side airbag 25 with the smaller joining force being made to be so weak that the front pillar garnish 36 separates from the bottom surface 75 of the small impact absorbing member 70 when the front pillar garnish 36 is so deformed, of the portions of the bottom surface 75 of the small impact absorbing member 70, the joined rear half portion 76 which is located closer to the roof side airbag 25 is allowed to separate from the front pillar garnish 36 when the large magnitude of separation force is applied.

As shown in Fig. 6, which has been referred to before, a swing proximal end of the one end portion 61 of the front pillar garnish 36 is located at a boundary point 79. The length L3 from one end 66 to the boundary point 79 is longer by the length L2 of the rear half portion 76. The deformation of the one end portion 61 of the front pillar garnish 36 toward the thickness direction thereof can be facilitated by such an extent that the length L3 is made so longer. Thus, the one end portion 61 of the front pillar garnish 36 is allowed to deform largely with less force without being restricted by the small impact absorbing member 70.

Consequently, when the roof side airbag 25 is inflated the one end portion 61 of the front pillar garnish 36 can easily deform by such a sufficient amount that the roof side airbag 25 is allowed to inflated quickly and smoothly. Since the front pillar garnish 36 is allowed to deform largely with less force, there is caused no concern that the roof side airbag 25 and/or the small impact absorbing member 70 may be damaged.

Moreover, the joining force at the front half portion 77 is so strong that the front pillar garnish 36 is not allowed to separate from the front half portion 77 even when the front pillar garnish 36 is bent (or deformed). Of the portions of the bottom surface 75 of the small impact absorbing member 70, the front half portion 77 is maintained in the attached condition. Due to this, the small impact absorbing member 70 is maintained in the attached condition to the front pillar 32 together with the front pillar garnish 36 even after the roof side airbag 25 has been inflated to be deployed. Consequently, the small impact absorbing member 70 can perform its function to absorb impact even after the roof side airbag 25 has been deployed.

In addition, the length L3 can be increased extremely easily without altering the layout relationship between the roof side airbag 25 and the small impact absorbing member 70 and/or expanding the space S1.

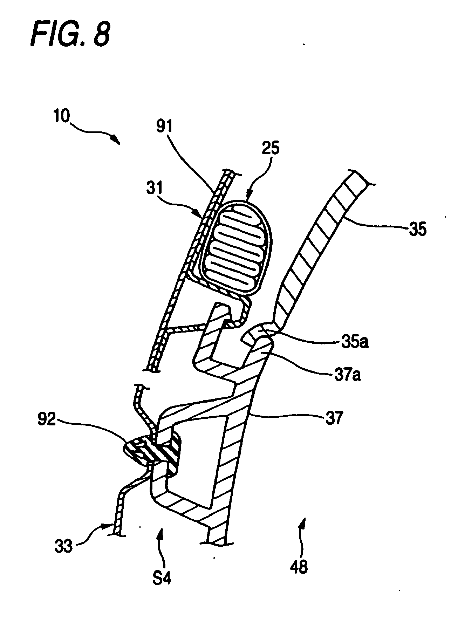

Fig. 8 is a sectional view taken along the line 8-8 in Fig. 1 and shows that the center pillar 37 is attached in such a manner as to secure a predetermined amount of space S4 on the passenger compartment 48 side of a roof panel 91 of the roof 31 and the center pillar 33, respectively, and the roof lining 35 is attached in such a manner as to secure a predetermined amount of space S4 on the passenger compartment 48 side of the roof panel 91 and that the roof side airbag 25 is accommodated in the space S4.

The roof lining 35 can be fastened to the center pillar garnish 37 by allowing a lower end portion 35a of the roof lining 35 to be hooked on the back of an upper end portion 37a of the center pillar garnish 37. Reference numeral 92 denotes a center pillar garnish attachment clip.

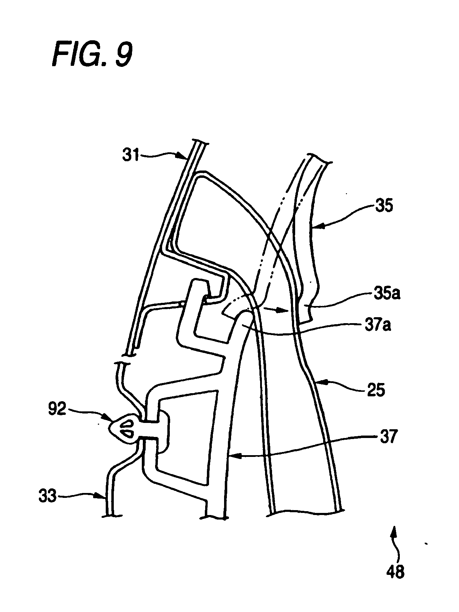

Fig. 9 is a diagram showing the function of the roof side airbag according to the invention as viewed at the location of the center pillar garnish and is shown so as to correspond to Fig. 8.

The figure illustrates that the roof side airbag 25 inflates into the passenger compartment 48 side while forcibly opening the lower end portion 35a of the roof lining 35. The lower end portion 35a is pushed toward the passenger compartment 48 side to thereby elastically deform, whereby the lower end portion 35a is allowed to separate from the upper end portion 37a of the center pillar garnish 37. As a result, the roof side airbag 25 is allowed to inflate downwardly into the passenger compartment 48.

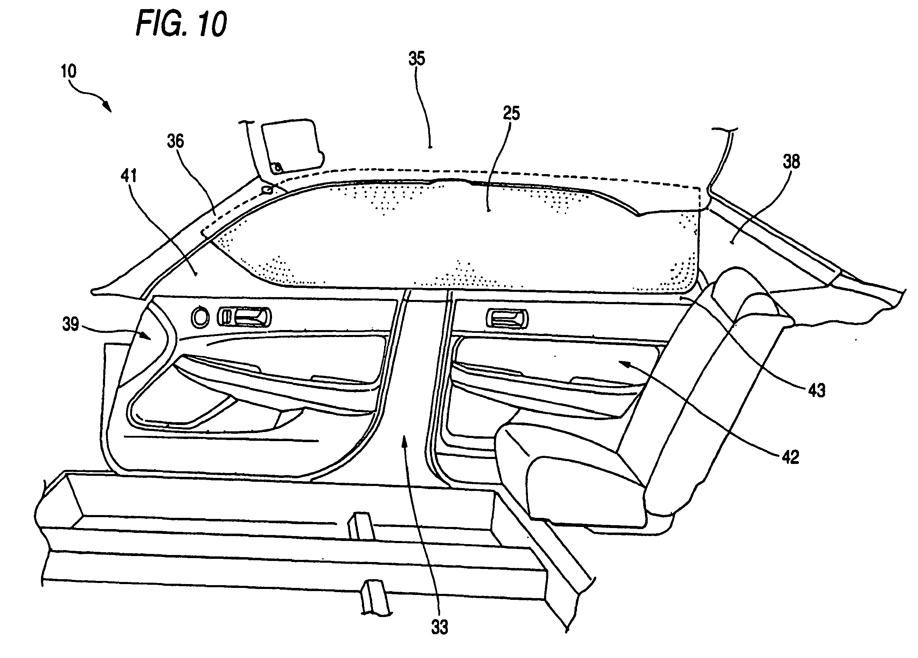

Fig. 10 is a diagram showing the function of the roof side airbag according to the invention and illustrates that the roof side airbag 25 inflates along the front door window glass 41 and the rear door window glass 43 in such a manner as a curtain falls. Thus, the upper half bodies (for example, the heads and/or shoulders) of the occupants can be protected by the roof side airbag 25 which so inflates when an impact of a predetermined magnitude or more is applied to a side of the vehicle.

Note that in the embodiment of the invention, the pillar which supports the roof 31 is not limited to the front pillar 32. Additionally, the pillar garnish is not limited to the front pillar garnish 36.

Furthermore, the provision of the gaps S2, S3 is optional.

According to the first aspect of the invention, the proximal end for deformation (the deformation proximal end) at the one end portion of the front pillar garnish can be set at the boundary point between the position of the bottom surface of the small impact absorbing portion which is located closer to the roof side airbag and the position thereof which is located farther away from the roof side airbag by attaching not the closer position but the farther position to the pillar garnish. The length from the deformation proximal end to the deformation distal end becomes long. This can facilitate the deformation of the one end portion of the front pillar garnish to the thickness direction thereof by such an extent that the length is enlarged. Due to this, the one end portion of the front pillar garnish is allowed to deform largely with less force without being restricted by the small impact absorbing member. The one end portion of the front pillar garnish is allowed to easily deform by such a sufficient amount that the roof side airbag is allowed to inflate quickly and smoothly when the roof side airbag is deployed.

Moreover, of the positions of the bottom surface of the small impact absorbing member, the position which is located farther away from the roof side airbag is maintained in the attached condition. Due to this, even after the roof side airbag has been inflated outwardly to be deployed, the small impact absorbing member remains attached to the pillar together with the pillar garnish. Consequently, the small impact absorbing member can perform its impact absorbing function even after the roof side airbag has been deployed.

In addition, the length can be enlarged extremely easily without altering the layout relationship between the roof side airbag and the small impact absorbing member and/or enlarging the space provided between the front pillar and the front pillar garnish.

Furthermore, since the construction is adopted in which the small impact absorbing member is separated from the pillar garnish, optimal materials can be selected for the respective members. For example, the pillar garnish can be formed of a soft material, whereas the small impact absorbing member of a hard material.

Furthermore, in the ordinary condition where no impact is applied, the front pillar garnish can sufficiently perform its function as the interior material.

Moreover, when the vehicle receives at a side thereof an impact of such a small magnitude that the roof side airbag remains unopened, the impact can be transmitted from the front pillar garnish to the small impact absorbing member in quick and ensured fashions.

According to the second aspect of the invention, since the joining force at the position of the bottom surface of the small impact absorbing member which is located closer to the roof side airbag is set smaller than the joining force at the position of the bottom surface of the small impact absorbing member which is located farther away from the roof side airbag, the joining force so set smaller being a force which is so weak that the pillar garnish is allowed to separate from the bottom surface of the small impact absorbing member when the pillar garnish is deformed, of the joined positions of the bottom surface of the small impact absorbing member, the position located closer to the roof side airbag is allowed to separate from the front pillar garnish when the large magnitude of separation force is applied. Consequently, the proximal end for deformation at the one end portion of the front pillar garnish can be set at the boundary point between the closer position and the father position. The length from the deformation proximal end to the deformation distal end becomes large. This can facilitate the deformation of the one end portion of the front pillar garnish in the thickness direction thereof by such an extent that the length is increased. This allows in turn the one end portion of the front pillar garnish to deform largely with less force without being restricted by the small impact absorbing member. The one end portion of the front pillar garnish is thus allowed to deform easily by such a sufficient amount that the roof side airbag can inflate outwardly quickly and smoothly.

Moreover, of the positions of the bottom surface of the small impact absorbing member, what is caused to separate from the pillar garnish is only the position which is located closer to the roof side airbag, and the position which is located father away from the roof side airbag is maintained in the joined condition. Due to this, even after the roof side airbag has been inflated to be deployed, the small impact absorbing member remains attached to the pillar together with the pillar garnish. Consequently, the small impact absorbing member can attain the function to absorb impact even after the roof side airbag has been deployed.

In addition, the length can be enlarged extremely easily without altering the layout relationship between the roof side airbag and the small impact absorbing member and/or enlarging the space provided between the pillar and the front pillar garnish.

Furthermore, since the construction is adopted in which the small impact absorbing member is separated from the pillar garnish, optimal materials can be selected for the respective members. For example, the pillar garnish can be formed of a soft material, whereas the small impact absorbing member of a hard material.

Furthermore, in the ordinary condition where no impact is applied, the front pillar garnish can perform its function to play a role of the interior material sufficiently.

In addition, when the vehicle receives at a side thereof an impact of such a small magnitude that the roof side airbag remains unopened, the impact so received can be transmitted from the front pillar garnish to the small impact absorbing member in quick and ensured fashions.

A vehicle occupants protection system wherein a front pillar garnish is mounted on a passenger compartment side of a front pillar which supports a roof with a predetermined amount of space being maintained therebetween for accommodating a side airbag, as well as a small impact absorbing member for absorbing an impact of such a small magnitude that the side airbag remains unopened, whereby the side airbag is inflated by gas generated when an impact of a predetermined magnitude or more is applied to a side of a vehicle so as to expand into a passenger compartment while forcibly opening one end portion of the front pillar garnish. Of positions of a bottom surface of the small impact absorbing member, not a position which is located closer to the side airbag but a position which is located farther away from the side airbag is attached to the front pillar garnish.

## Claims

1. A vehicle occupants protection system comprising:
a pillar garnish (36) mounted on a passenger compartment side of a pillar (32) which supports a roof (31) to define a predetermined amount of a space portion (S1) between said pillar (32) and said pillar garnish (36);
a roof side airbag (25) accommodated in said space portion (S1), said roof side airbag (25) being inflated by gas generated when an impact of a predetermined magnitude or more is applied to a side of a vehicle so as to expand into the passenger compartment side (48) of said vehicle while forcibly opening one end portion (61) of said pillar garnish (36); and
an impact absorbing member (70) accommodated in said space portion (S1), for absorbing an impact of such a small magnitude that said roof side airbag (25) remains unopened,
**characterized in that**
said impact absorbing member (70) is only attached to said pillar garnish (36) and comprises a bottom plate (71) extending along an inner surface (63) of said pillar garnish (36), wherein said bottom plate (71) has a front portion (77) being inseparable attached to said pillar garnish (36), and a rear portion (76) being separable or separated from said pillar garnish (36), wherein said rear portion (76) is located closer to said roof side airbag (25) than said front portion (77).

2. The vehicle occupants protection system according to claim 1,
wherein said bottom plate (71) of said impact absorbing member (70) is joined to said pillar garnish (36) through one of bonding, heat crimping, welding, ultrasonic welding, machine screwing and clipping.

3. The vehicle occupants protection system according to claim 1,
wherein said bottom plate (71) of said impact absorbing member (70) is formed in such a manner that its thickness at the rear portion (76) is thinner than that at the front portion (77) so as to define a gap (53) between said pillar garnish (36) and said impact absorbing member (70) at the rear portion (76).

4. The vehicle occupants protection system according to claim 1 or 2, wherein said rear portion (76) is separable attached to said pillar garnish (36), so that said pillar garnish (36) is allowed to separate from said rear portion (76) of said bottom plate (71) of said impact absorbing member (70) when said pillar garnish (36) is deformed.

5. The vehicle occupants protection system according to any of claims 1 to 4, wherein said pillar garnish (36) is attached to said pillar (32) by a clip (65).

6. The vehicle occupants protection system according to any of claims 1 to 5, wherein a space (S2) is provided between said pillar (32) and said impact absorbing member (70).

## Patentansprüche

1. Fahrzeuginsassen-Schutzssystem, umfassend:
eine Säulenverkleidung (36), die an einer Passagierraumseite einer Säule (32) angebracht ist, die ein Dach (31) trägt, um einen vorbestimmten Raumabschnitt (S1) zwischen der Säule (32) und der Säulenverkleidung (36) zu definieren;
einen Dachseiten-Airbag (25), der in dem Raumabschnitt (S1) untergebracht ist, wobei der Dachseiten-Airbag (25) durch Gas aufgeblasen wird, das erzeugt wird, wenn ein Aufprall mit vorbestimmter Höhe oder mehr auf eine Seite eines Fahrzeugs einwirkt, um sich in die Passagierraumseite (48) des Fahrzeugs auszudehnen, während ein Endabschnitt (61) der Säulenverkleidung (36) zwangsweise geöffnet wird; und
ein Aufprallabsorptionselement (70), das in dem Raumabschnitt (S1) untergebracht ist, um einen Aufprall von derart kleiner Höhe zu absorbieren, bei der der Dachseiten-Airbag (25) ungeöffnet bleibt,
**dadurch gekennzeichnet, dass**
das Aufprallabsorptionselement (70) nur an der Säulenverkleidung (36) angebracht ist und eine Bodenplatte (71) aufweist, die sich entlang einer Innenoberfläche (63) der Säulenverkleidung (36) erstreckt, worin die Bodenplatte (71) einen vorderen Abschnitt (77), der untrennbar an der Säulenverkleidung (36) angebracht ist, und einen hinteren Abschnitt (76), der von der Säulenverkleidung (36) trennbar oder getrennt ist, aufweist, worin der hintere Abschnitt (76) dem Dachseiten-Airbag (25) näher ist als der vordere Abschnitt (77).

2. Das Fahrzeuginsassen-Schutzsystem nach Anspruch 1, worin die Bodenplatte (71) des Aufprallabsorptionselements (70) mit der Säulenverkleidung (36) durch eines von Verkleben, Wärmekrimpen, Schweißen, Ultraschall-Schweißen, Maschinenschrauben und Verklemmen verbunden ist.

3. Das Fahrzeuginsassen-Schutzsystem nach Anspruch 1, worin die Bodenplatte (71) des Aufprallabsorptionselements (70) derart ausgebildet ist, dass ihre Dicke am hinteren Abschnitt (76) dünner ist als jene am vorderen Abschnitt (77), um an dem hinteren Abschnitt (76) zwischen der Säulenverkleidung (36) und dem Aufprallabsorptionselement (70) eine Lücke ('53) zu definieren.

4. Das Fahrzeuginsassen-Schutzsystem nach Anspruch 1 oder 2, worin der hintere Abschnitt (76) an der Säulenverkleidung (36) trennbar angebracht ist, so dass sich die Säulenverkleidung (36) von dem hinteren Abschnitt (76) der Bodenplatte (71) des Aufprallabsorptionselements (70) trennen lässt, wenn die Säulenverkleidung (36) verformt wird.

5. Das Fahrzeuginsassen-Schutzsystem nach einem der Ansprüche 1 bis 4, worin die Säulenverkleidung (36) an der Säule (32) durch eine Klemme (65) angebracht ist.

6. Das Fahrzeuginsassen-Schutzsystem nach einem der Ansprüche 1 bis 5, worin zwischen der Säule (32) und dem Aufprallabsorptionselement (70) ein Zwischenraum (S2)vorgesehen ist.

## Revendications

1. Système de protection pour les occupants d'un véhicule, comprenant:
une garniture de montant (36) qui est montée sur un côté de compartiment passagers d'un montant (32) qui supporte un toit (31) afin de définir une quantité prédéterminée d'une partie d'espace (S1) entre ledit montant (32) et ladite garniture de montant (36);
un coussin d'air latéral de toit (25) qui est logé dans ladite partie d'espace (S1), ledit coussin d'air latéral de toit (25) étant gonflé par un gaz qui est généré, lorsqu'un impact d'une grandeur prédéterminée ou plus fort est appliqué à un côté d'un véhicule de manière à se déployer dans le côté de compartiment passagers (48) dudit véhicule tout en ouvrant de force une partie d'extrémité (61) de ladite garniture de montant (36); et
un élément d'absorption d'impact (70) qui est logé dans ladite partie d'espace (S1) pour absorber un impact d'une grandeur tellement réduite que ledit coussin d'air latéral de toit (25) reste fermé,
**caractérisé en ce que** ledit élément d'absorption d'impact (70) est uniquement attaché à ladite garniture de montant (36) et comprend une plaque inférieure (71) qui s'étend le long d'une surface intérieure (63) de ladite garniture de montant (36), dans lequel ladite plaque inférieure (71) présente une partie avant (77) qui est attachée de façon inséparable à ladite garniture de montant (36), et une partie arrière (76) qui est séparable ou séparée de ladite garniture de montant (36), dans lequel ladite partie arrière (76) est située plus près dudit coussin d'air latéral de toit (25) que ladite partie avant (77).

2. Système de protection pour les occupants d'un véhicule selon la revendication 1, dans lequel ladite plaque inférieure (71) dudit élément d'absorption d'impact (70) est jointe à ladite garniture de montant (36) par collage, sertissage thermique, soudage, soudage aux ultrasons, vissage à la machine ou par attache.

3. Système de protection pour les occupants d'un véhicule selon la revendication 1, dans lequel ladite plaque inférieure (71) dudit élément d'absorption d'impact (70) est formée de telle sorte que son épaisseur à la partie arrière (76) soit plus petite qu'à la partie avant (77) de manière à définir un espace (53) entre ladite garniture de montant (36) et ledit élément d'absorption d'impact (70) à la partie arrière (76).

4. Système de protection pour les occupants d'un véhicule selon la revendication 1 ou 2, dans lequel ladite partie arrière (76) est attachée de façon séparable à ladite garniture de montant (36), de telle sorte que ladite garniture de montant (36) soit capable de se séparer de ladite partie arrière (76) de ladite plaque inférieure (71) dudit élément d'absorption d'impact (70) lorsque ladite garniture de montant (36) est déformée.

5. Système de protection pour les occupants d'un véhicule selon l'une quelconque des revendications 1 à 4, dans lequel ladite garniture de montant (36) est attachée audit montant (32) par une attache (65).

6. Système de protection pour les occupants d'un véhicule selon l'une quelconque des revendications 1 à 5, dans lequel un espace (S2) est prévu entre ledit montant (32) et ledit élément d'absorption d'impact (70).
